# EUROPEAN PATENT SPECIFICATION

(11) **EP 3 205 865 B1**
(45) Date of publication and mention of the grant of the patent: **19.09.2018**
(21) Application number: 17155344.9
(22) Date of filing: 09.02.2017
(51) Int. Cl.: F02D 41/02, F02D 41/40, F02D 41/00, F02F 1/24, F02P 5/04, F02P 5/145, F02P 5/15, F02D 37/02, F02D 41/38, F01N 3/04, F02F 1/40

(54) **Control device for vehicle**
Steuerungsvorrichtung für ein Fahrzeug
Dispositif de commande pour véhicule

(30) Priority: 12.02.2016 JP 2016025039
(43) Date of publication of application: 16.08.2017
(73) Proprietor: TOYOTA JIDOSHA KABUSHIKI KAISHA, Toyota-shi, Aichi 471-8571 (JP)
(72) Inventor: KUDO, Masahito, Toyota-shi,, Aichi 471-8571 (JP)
(74) Representative: TBK

(56) References cited:
- EP-A1- 2 110 536
- DE-A1- 3 815 408
- GB-A- 2 519 167
- US-A1- 2003 140 618
- US-A1- 2011 072 794
- US-A1- 2015 300 245

## Description

### BACKGROUND OF THE INVENTION

### 1. Field of the Invention

The present invention relates to a device for controlling a vehicle provided with an internal combustion engine, and particularly relates to a device configured to regenerate a filter provided in an exhaust passage.

### 2. Description of Related Art

In order to catch particulate matter (PM) included in exhaust gas from an internal combustion engine, a particulate filter to be provided in an exhaust passage is widely used. Such a particulate filter can be regenerated by oxidizing and removing the particulate matter thus caught.

A hybrid vehicle described in Japanese Patent Application Publication No. 2015-128935 (JP 2015-128935 A) is configured such that a gasoline particulate filter (GPF) is provided in an exhaust passage of a gasoline engine, and the hybrid vehicle includes a control device configured to perform a temperature-increase control to remove particulate matter deposited in the GPF by burning.

In the vehicle described in JP 2015-059492 A, an exhaust manifold is provided integrally with a cylinder head of an internal combustion engine. The exhaust manifold is configured to be cooled down by a water jacket provided in the cylinder head.

However, in terms of the internal combustion engine having a structure in which the exhaust manifold is provided integrally with the cylinder head, as described in JP 2015-059492 A, in a case where a particulate filter is provided in the exhaust passage, an optimum engine control including a temperature increase of the particulate filter has not been considered.

US 2011/072794 A discloses a control device for a vehicle. The vehicle includes an internal combustion engine being a spark-ignition engine, a water pump connected to an output shaft of the internal combustion engine, the water pump being configured to supply a coolant to a water jacket provided in the cylinder head, a turbocharger connected to the internal combustion engine, a bypass passage configured to bypass a turbine of the turbocharger, a wastegate valve configured to open and close the bypass passage, and a filter provided in an exhaust passage of the internal combustion engine, the filter being configured to catch particulate matter in the exhaust gas. The control device comprises an electronic control unit configured such that, when regeneration of the filter is requested, the electronic control unit retards an ignition timing of the internal combustion engine and decreases an opening degree of the wastegate valve as compared with the ignition timing of the internal combustion engine and the opening degree of the wastegate valve when the regeneration is not requested.

EP 2 110 536 A1, GB 2 519 167 A and DE 38 15 408 A1 disclose the use of an integrated water-cooled exhaust manifold in a cylinder head.

### SUMMARY OF THE INVENTION

In view of this, in terms of an internal combustion engine having a structure in which an exhaust manifold is provided integrally with a cylinder head, the present invention provides an optimum engine control including a temperature increase of a particulate filter in a case where the particulate filter is provided in an exhaust passage of the internal combustion engine.

In a control device for a vehicle, according to one aspect of the present invention, the vehicle includes: an internal combustion engine provided with an exhaust manifold in a cylinder head, the internal combustion engine being a spark-ignition engine; a mechanical water pump connected to an output shaft of the internal combustion engine, the mechanical water pump being configured to supply a coolant to a water jacket provided in the cylinder head so as to cool down the exhaust manifold; a turbocharger connected to the internal combustion engine; a bypass passage configured to bypass a turbine of the turbocharger; a wastegate valve configured to open and close the bypass passage; and a filter provided in an exhaust passage of the internal combustion engine, the filter being configured to catch particulate matter in the exhaust gas. The control device includes an electronic control unit configured such that, when regeneration of the filter is requested, the electronic control unit retards an ignition timing of the internal combustion engine and decreases an opening degree of the wastegate valve as compared with the ignition timing of the internal combustion engine and the opening degree of the wastegate valve when the regeneration is not requested. The control device further includes an electronic control unit configured to increase a target fuel injection amount based on an exhaust gas temperature when the exhaust gas temperature is larger than a predetermined threshold.

In this aspect, when the regeneration of the filter is request, the device controls the ignition timing of the internal combustion engine to be retarded as compared with a case where the regeneration is not requested. When the ignition timing is retarded, it is possible to increase an exhaust gas temperature. In the meantime, an output may decrease. In view of this, the device controls the opening degree of the wastegate valve to be decreased (that is, toward a closing side). Hereby, a boost pressure is increased, thereby making it possible to restrain or compensate for the decrease of the output.

The vehicle to which the present invention is applied includes the mechanical water pump connected to the output shaft of the internal combustion engine, and the mechanical water pump is configured to supply the coolant to the water jacket provided in the cylinder head so as to be able to cool down the exhaust manifold.

In the configuration to cool down the exhaust manifold by the coolant from the mechanical water pump, when a rotation number of the internal combustion engine increases, a flow rate of the coolant increases accordingly, so that the cooling of the exhaust manifold is promoted, which may prevent a temperature increase of a particulate filter. However, in the present invention, due to the ignition retardation and the control on the wastegate valve toward a closing side, it is possible to restrain an increase of the rotation number of the internal combustion engine and to restrain or compensate for the decrease of the output, thereby making it possible to restrain a decrease of the exhaust gas temperature due to the increase of the flow rate of the coolant by the water pump and to regenerate the particulate filter quickly.

In the above aspect, the electronic control unit may be configured to retard the ignition timing of the internal combustion engine such that a temperature of the filter increases to be equal to or larger than a regenerable temperature at which the particulate matter deposited in the filter is removed by burning. In this case, the regeneration of the filter can be performed preferably.

In the above aspect, the electronic control unit may be configured to decrease the opening degree of the wastegate valve such that a decrease in torque of the internal combustion engine by the retardation of the ignition timing is compensated. In this case, the decrease in torque of the internal combustion engine by the retardation of the ignition timing is compensated, thereby making it possible to improve drivability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view illustrating an overall configuration of a vehicle according to an embodiment of the present invention;
FIG. 2 is a perspective view illustrating a cylinder head;
FIG. 3 is a sectional view of the cylinder head taken along a line 3A-3A in FIG. 2;
FIG. 4 is a sectional view of the cylinder head taken along a line 4A-4A in FIG. 3;
FIG. 5 is a flowchart illustrating a process related to controls on an internal combustion engine, a WGV, and automatic transmission in connection with filter regeneration in the embodiment of the present invention; and
FIG. 6 is a graph illustrating a normal-time map and a regeneration map to calculate a target WGV opening degree in the embodiment of the present invention.

### DETAILED DESCRIPTION OF EMBODIMENTS

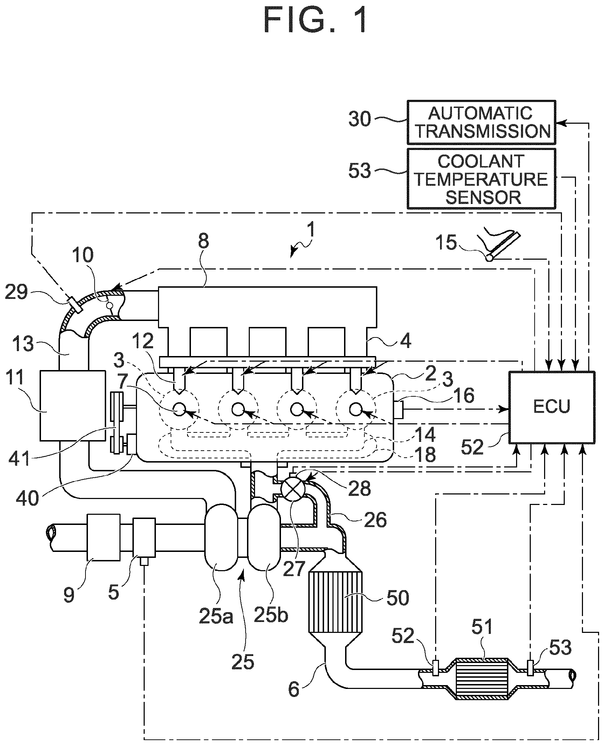

An embodiment of the present invention will hereinafter be described in detail with reference to the attached drawings. FIG. 1 is a schematic view of an internal combustion engine according to the present embodiment. As illustrated herein, the internal combustion engine (engine) 1 burns fuel/air mixture of fuel and air in a combustion chamber 3 and causes a piston to reciprocate in the combustion chamber 3 so as to generate power. The internal combustion engine 1 of the present embodiment is a multi-cylinder internal combustion engine provided in an automobile, more specifically, an inline four-cylinder spark-ignition internal combustion engine, namely, a gasoline engine. However, an internal combustion engine to which the present invention is applicable is not limited to the above, and the number of cylinders, a type, and the like are not limited in particular. An output shaft (not shown) of the internal combustion engine 1 is connected to a torque converter (not shown), an automatic transmission 30, and a differential gear assembly (not shown), and drives driving wheels (not shown). The automatic transmission 30 is a stepped transmission, but may be a continuously variable transmission.

Although not illustrated herein, a cylinder head 2 of the internal combustion engine 1 is configured such that an intake valve for opening and closing an intake port and an exhaust valve for opening and closing an exhaust port are disposed for each cylinder, and the intake valve and the exhaust valve are opened and closed by a camshaft. In connection with the intake valve and the exhaust valve, a variable valve timing mechanism (not shown) for controlling their opening/closing timings according to an operating state is disposed. An ignition plug 7 for igniting the fuel/air mixture in the combustion chamber 3 is provided for each cylinder in a top portion of the cylinder head 2.

The intake port of each cylinder is connected to a surge tank 8, which is an intake collection chamber, via a branch pipe 4 provided for each cylinder. An intake pipe 13 is connected to an upstream side of the surge tank 8, and the intake pipe 13 is connected to an outlet of a compressor 25a of a turbocharger 25. An inlet of the compressor 25a is connected to an air cleaner 9. An air flow meter 5 for detecting an intake-air amount (an amount of intake air per unit time, that is, an intake air flow rate), and an electronic control throttle valve 10 are incorporated into the intake pipe 13. An intake passage is formed by the intake port, the branch pipe 4, the surge tank 8, and the intake pipe 13. An intercooler 11 for cooling the intake air flowing through the intake pipe 13 is placed around the intake pipe 13. An engine coolant is led into the intercooler 11, so that the intake air is cooled down by the engine coolant.

An injector (fuel injection valve) 12 for directly injecting the fuel into a corresponding cylinder is disposed for each cylinder. The fuel injected from the injector 12 is compressed by the piston with the intake air taken into the combustion chamber 3 at the time when the intake valve is opened, so as to be ignited by the ignition plug 7 to burn. The injector 12 may be disposed so as to inject the fuel into the intake port of the intake passage.

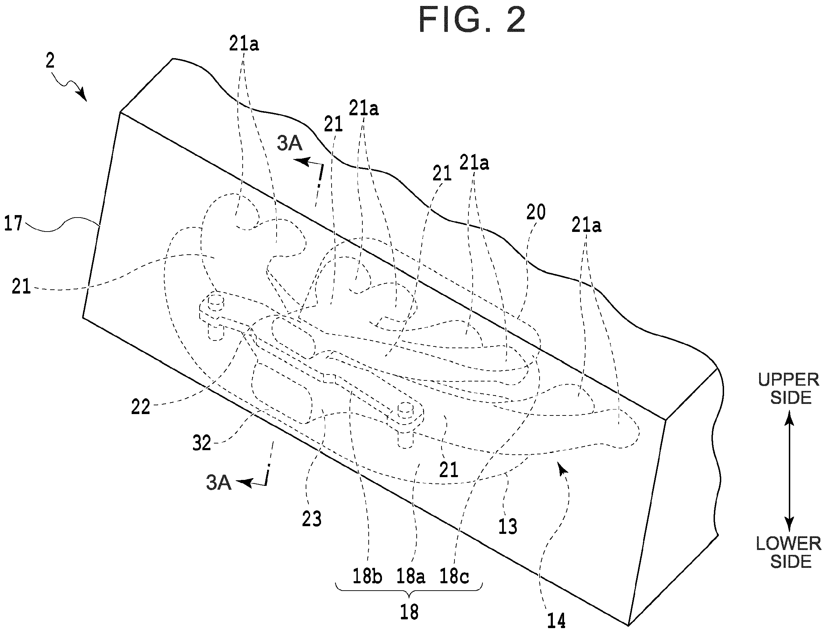

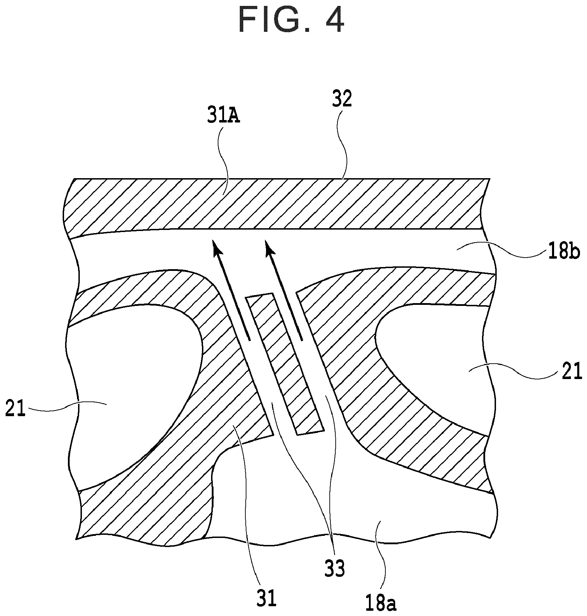

As illustrated in FIG. 2 or 4, the cylinder head 2 in the present embodiment includes a head body 17, and an exhaust manifold 14 is provided integrally in the head body 17. The exhaust manifold 14 includes four exhaust passages 21, a first junction portion 22, and a second junction portion 23. A water jacket 18 is further provided in the head body 17 so as to be able to cool down the combustion chamber 3 and the exhaust manifold 14. The water jacket 18 includes a lower jacket 18a, an intermediate jacket 18b, and an upper jacket 18c.

A branch portion 21a is formed on an upstream side of the exhaust passage 21. The branch portion 21a is connected to an exhaust port (not shown) of the combustion chamber 3. The branch portion 21a branches the exhaust passage 21 into two. The first junction portion 22 joins respective downstream sides of two exhaust passages 21 out of the four exhaust passages 21. The second junction portion 23 joins respective downstream sides of the other two exhaust passages 21 out of the four exhaust passages 21. The second junction portion 23 is placed so as to be distanced from the first junction portion 22.

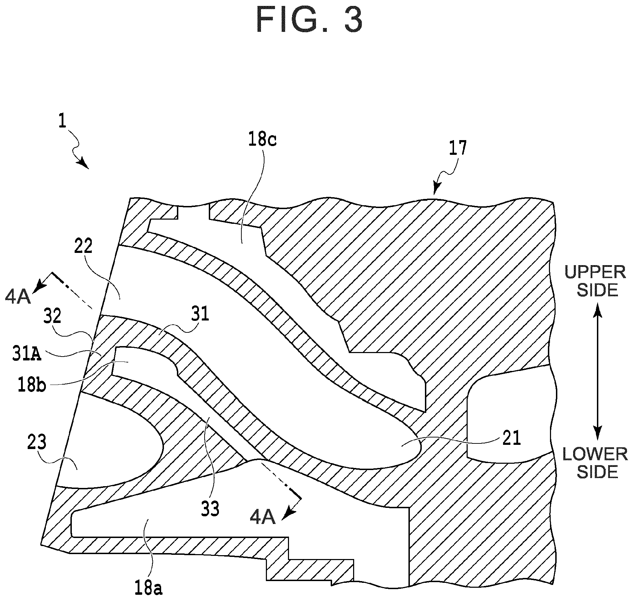

As illustrated in FIG. 3, the head body 17 includes a partition wall 31. The partition wall 31 constitutes a part between the junction portions 22, 23. Further, the head body 17 includes an attachment surface 32. The junction portions 22, 23 are opened on the attachment surface 32. A turbocharger 25 is attached to the attachment surface 32 via a gasket (not shown).

The lower jacket 18a is formed on a lower side relative to the exhaust passages 21 in the head body 17. As illustrated in FIG. 2, the lower jacket 18a covers the exhaust passages 21 from the lower side. A coolant for cooling down the internal combustion engine is pressurized by a mechanical water pump 40 (FIG. 1) and is supplied to the lower jacket 18a from a cooling channel (not shown) of the cylinder block.

As illustrated in FIG. 3, the intermediate jacket 18b is provided in the partition wall 31. As illustrated in FIG. 2, the intermediate jacket 18b covers the first junction portion 22 from its lower side and covers the second junction portion 23 from its upper side. The intermediate jacket 18b extends in a direction where the exhaust passages 21 are arranged.

As illustrated in FIG. 3, the upper jacket 18c is formed on the upper side relative to the exhaust passages 21 in the head body 17. As illustrated in FIG. 2, the upper jacket 18c covers the exhaust passages 21 from the upper side. The upper jacket 18c communicates with the lower jacket 18a. The coolant is supplied to the upper jacket 18c from the lower jacket 18a.

As illustrated in FIGS. 3 and 4, two communicating passages 33 are provided in the partition wall 31. The two communicating passages 33 are formed with a space therebetween in a direction where the intermediate jacket 18b extends. The communicating passages 33 communicate the lower jacket 18a with the intermediate jacket 18b. The coolant in the lower jacket 18a is supplied to the intermediate jacket 18b via the communicating passages 33 so as to cool down the partition wall 31 and an end wall 31A. The end wall 31A constitutes the attachment surface 32, so that the attachment surface 32 is more effectively cooled down.

Again with reference to FIG. 1, the mechanical water pump 40 is attached to a front end face of the cylinder block of the internal combustion engine 1. A rotational force of a crankshaft or a starter motor (not shown) of the internal combustion engine 1 is transmitted via a belt 41, so that the mechanical water pump 40 operates. The mechanical water pump 40 operates so as to push the coolant into the internal combustion engine 1 from an engine inlet (not shown). The coolant flows into the water jacket 18 of the cylinder head 2 through the cylinder block and cools down the combustion chamber 3 and the exhaust manifold 14. After that, the coolant goes out from an engine outlet (not shown) and then circulates to a radiator (not shown).

Downstream sides of the first junction portion 22 and the second junction portion 23 of the exhaust manifold 14 are connected to an inlet of an exhaust gas turbine 25b of the turbocharger 25. An outlet of the exhaust gas turbine 25b is connected to an exhaust pipe 6. An exhaust path is formed by the exhaust port, the exhaust manifold 14, and the exhaust pipe 6.

A bypass passage 26 and an electronic control wastegate valve (WGV) 27 for opening and closing the bypass passage 26 are provided in the exhaust pipe 6, so as to bypass the exhaust gas turbine 25b of the turbocharger 25. The WGV 27 is configured to steplessly change its opening degree between a fully opening state and a fully closing state. The WGV 27 is configured to drive a valve body by a motor and a gear mechanism. The gear mechanism includes a worm gear and a helical gear, for example, and is provided with a WGV opening degree sensor 28 for detecting an opening degree of the valve body by detecting a rotation position of the helical gear. Note that the WGV 27 may be a diaphragm-type valve controlled by a boost pressure or an intake pipe pressure.

A catalyst 50 and a filter 51 are attached to the exhaust pipe 6 in series. The catalyst 50 is configured such that noble metal such as platinum (Pt), palladium (Ph), or rhodium (Rd) is carried by alumina, for example, and can collectively purify carbon monoxide (CO), hydrocarbon (HC), nitrogen oxide (NOx), and the like by catalytic reaction.

The filter 51 is a GPF (Gasoline Particulate Filter). Cordierite or metal is used for a base material of the filter 51. The filter 51 is a so-called wall-flow filter configured such that, among a plurality of cells, a cell plugged on the upstream side and a cell plugged on the downstream side are placed so as to be adjacent to each other, but may be a so-called straight-flow filter configured such that individual cells communicate from upstream to downstream. The filter 51 catches particulate matter (PM) in exhaust gas. The PM thus caught is deposited in the filter 51. Note that the filter 51 may be placed at a position on the upstream side relative to the catalyst 50 of the exhaust passage. Further, the filter 51 may carry a catalyst material so as to have a function similar to the catalyst 50. In this case, the catalyst 50 may be omitted.

An upstream pressure sensor 52 is provided at a position on the upstream side relative to the filter 51 in the exhaust passage. A downstream pressure sensor 53 is provided at a position on the downstream side relative to the filter 51 in the exhaust passage. The upstream pressure sensor 52 and the downstream pressure sensor 53 are configured so as to be able to detect a pressure in the exhaust passage.

The ignition plug 7, the throttle valve 10, the injector 12, the WGV 27, and the like are electrically connected to an electronic control unit (hereinafter refer to as the ECU) 52 as a control device. The ECU 52 includes a CPU, a ROM, a RAM, an input/output port, a storage device, and the like (not shown). Further, as illustrated herein, various sensors are electrically connected to the ECU 52 via an A/D converter and the like (not shown), in addition to the air flow meter 5, the WGV opening degree sensor 28, the upstream pressure sensor 52, and the downstream pressure sensor 53. The various sensors include: a crank angle sensor 16 for detecting a crank angle of the internal combustion engine 1; an accelerator opening sensor 15 for detecting an accelerator opening; a coolant temperature sensor 53 for detecting a temperature of the coolant in the internal combustion engine 1; and a boost pressure sensor 29 placed on the downstream side relative to the intercooler 11 in the intake pipe 13 and configured to detect a pressure (boost pressure) on the upstream side of the throttle valve 10. Further, the ignition plug 7, the throttle valve 10, the injector 12, the automatic transmission 30, a variable valve timing mechanism, and the like are connected to the ECU 52 via a D/A converter and a drive circuit (not shown). The ECU 52 controls the ignition plug 7, the throttle valve 10, the injector 12, the WGV 27, the automatic transmission 30, the variable valve timing mechanism, and the like based on detection values and the like from various sensors, so as to obtain a desired output, thereby controlling an ignition timing, a throttle opening degree, a fuel injection amount, a WGV opening degree, a fuel injection timing, a transmission ratio, a valve timing, and the like. Note that the throttle opening degree is controlled to an opening degree according to an accelerator opening degree in general. The ECU 52 may be a single electronic control unit or may be constituted by a plurality of electronic control units that collaborate with each other.

When it is determined that regeneration of the filter 51 is requested, the ECU 52 performs a regeneration control on the filter 51. The regeneration control on the filter 51 is a control to increase a temperature of the filter 51 to a regenerable temperature (an active temperature) Tf(0) or more (hereinafter referred to a temperature-increase control) and supply air including oxygen to the filter 51, so as to remove the PM deposited in the filter 51 by burning. The PM thus deposited in the filter 51 is oxidized by a burning reaction with O2 due to the regeneration control, so as to be removed from the filter 51.

The ECU 52 determines whether or not regeneration of the filter 51 is requested or not by use of the upstream pressure sensor 52 and the downstream pressure sensor 53. More specifically, when a difference between an upstream pressure detected by the upstream pressure sensor 52 and a downstream pressure detected by the downstream pressure sensor 53 is higher than a predetermined threshold, the ECU 52 determines that the regeneration of the filter 51 is requested. Instead of a detection value of the downstream pressure sensor 53, a detection value of an atmospheric pressure sensor (not shown) for detecting an atmospheric pressure may be used. The threshold is a value to estimate that a deposition amount of the PM in the filter 51 is a predetermined amount or more, and may be a predetermined value adapted experimentally or in a design aspect or may be a value that changes according to an operating state of the internal combustion engine 1.

Note that a method for determining whether or not the regeneration of the filter 51 is requested is not limited to the above method using the upstream pressure sensor 52 and the downstream pressure sensor 53. For example, the ECU 52 may estimate a temperature of the filter 51 by use of various sensors such as an oxygen sensor, an air-fuel-ratio sensor, the air flow meter 5, a throttle angle sensor, the coolant temperature sensor 53, and the like, or may estimate a deposition amount of the PM in the filter 51 from an operation history, an operating time, an output decrease amount or the like of the internal combustion engine 1, and when the deposition amount thus estimated is a predetermined amount or more, the ECU 52 may determine that the regeneration of the filter 51 is requested.

In the present embodiment, as the temperature-increase control on the filter 51, an ignition retard correction and a closing correction of the WGV 27 are performed.

The ignition retard correction is a control to retard an ignition timing of the internal combustion engine 1 relative to a normal value, so that an exhaust gas temperature increases to such an extent that the filter 51 is regenerated. Due to the retardation of the ignition timing, unburned fuel burns or reacts in the exhaust passage such as the exhaust manifold 14 or in the catalyst 50 (so-called "afterburning"), thereby increasing the exhaust gas temperature. More specifically, the ignition retard correction is performed by retarding the ignition timing of the internal combustion engine 1 relative to the normal value only by a predetermined retard amount, so as to increase the exhaust gas temperature of the internal combustion engine 1, and hereby, the temperature of the filter 51 is increased.

In a normal time in which the regeneration control is not performed, the ECU 52, for example, finds a basic ignition timing based on a requested air amount (determined based on a stepping amount of an accelerator pedal) and an engine rotation speed, and corrects the basic ignition timing by a correction amount related to an intake air temperature, an intake pressure, a valve timing, and the like. Then, the ECU 52 controls an actual ignition timing of the ignition plug 7 so as to reach a corrected target ignition timing. In the normal time, the target ignition timing is set mainly for the purpose of prevention of occurrence of knocking. At the time of execution of the regeneration control, the ECU 52 corrects the basic ignition timing to a retard side by a correction amount corresponding to a predetermined temperature increase retard amount SAht in addition to the correction amount related to the intake air temperature and the like.

The retard correction of the ignition timing may be performed so as to change the ignition timing step by step to a value retarded from the normal value only by a predetermined retard amount at the time of the execution of the regeneration control, or may be performed so that the ignition timing is changed linearly or nonlinearly over time until the ignition timing reaches a value retarded from the normal value only by the predetermined retard amount. The predetermined retard amount is set in consideration of a response of a temperature increase of the filter 51, and the like, for example. Note that the retard amount may be set based on a PM clogging state of the filter 51, and the like, so that the retard amount increases as a difference in pressure is larger, for example.

By retarding the ignition timing of the internal combustion engine 1 relative to the normal value, the exhaust gas temperature increases to be higher than a case where the ignition timing is the normal value, thereby making it possible to increase the temperature of the filter 51 to the regenerable temperature Tf(0) at an early stage. Hereby, it is possible to remove the PM deposited in the filter 51 at an early stage.

In the meantime, by retarding the ignition timing of the internal combustion engine 1 relative to the normal value, an output torque of the internal combustion engine 1 decreases as compared with a case where the ignition timing is the normal value. On this account, in the present embodiment, by performing the closing correction on the opening degree of the WGV 27, the boost pressure is increased so as to compensate for the decrease of the output torque.

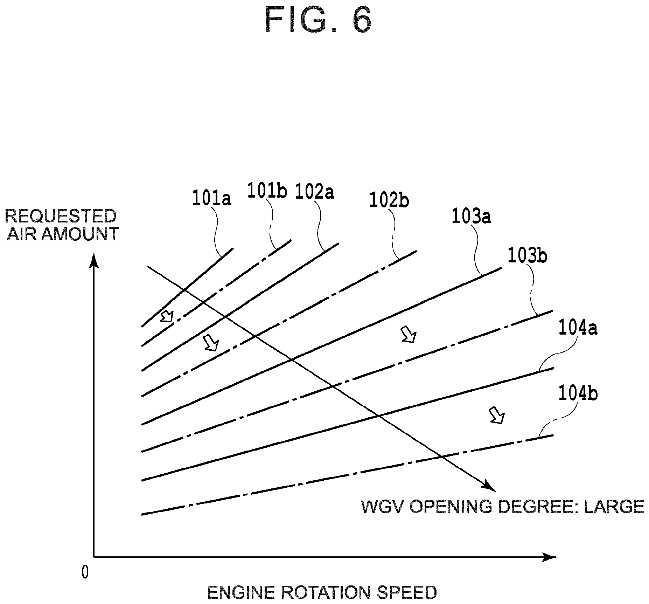

In order to calculate a target WGV opening degree for controlling the WGV 27, as illustrated in FIG. 6, a normal-time map (shown by curves 101a, 102a, 103a, 104a) to be used in the normal time in which the regeneration control is not performed and a regeneration map (shown by curves 101b, 102b, 103b, 104b) to be used at the time when the regeneration control is performed are provided in advance and stored in the ROM of the ECU 52. Both maps take the engine rotation speed and the requested air amount (determined based on the stepping amount of the accelerator pedal) as parameters, and are set such that the target WGV opening degree increases as the engine rotation speed is larger and as the request air volume is smaller. The curve 101a and the curve 101b have the same WGV opening degree, the curve 102a and the curve 102b have the same WGV opening degree, the curve 103a and the curve 103b have the same WGV opening degree, and the curve 104 and the curve 104b have the same WGV opening degree. The regeneration map (the curves 101b, 102b, 103b, 104b) is displaced toward a high rotation side and a small air amount side relative to the normal-time map (the curves 101a, 102a, 103a, 104a). That is, the regeneration map is set such that the target WGV opening degree is smaller than that of the normal-time map at the same engine rotation speed and the same requested air amount. Accordingly, when the regeneration map is used, the target WGV opening degree is corrected to be small (toward a closing side) in comparison with a time where the normal-time map is used. The opening degree of the WGV 27 in the regeneration map is set so as to compensate for the decrease of the output torque of the internal combustion engine 1 along with the retardation of the ignition timing by a temperature-increase ignition timing correction (step S30).

The ECU 52 calculates a WGV controlled amount based on a target WGV opening degree calculated from either one of the normal-time map and the regeneration map and an actual WGV opening degree detected by the WGV opening degree sensor 28, so that the target WGV opening degree and the actual WGV opening degree become the same. The ECU 52 performs a control such that the WGV controlled amount thus calculated by the ECU 52 is output to the drive circuit so as to drive the WGV 27 by the drive circuit, so that an opening degree detected by the WGV opening degree sensor 28 reaches the target WGV opening degree. Note that a correction amount of the opening degree of the WGV 27 in the regeneration map has a value that compensates for the decrease of the torque of the internal combustion engine 1 along with the retardation of the ignition timing by the temperature-increase ignition timing correction (step S30), but the correction amount may be slightly smaller than such a value so as not to completely compensate for the decrease of the torque of the internal combustion engine 1 along with the retardation of the ignition timing, and within such a range, a desired effect can be obtained in the present invention.

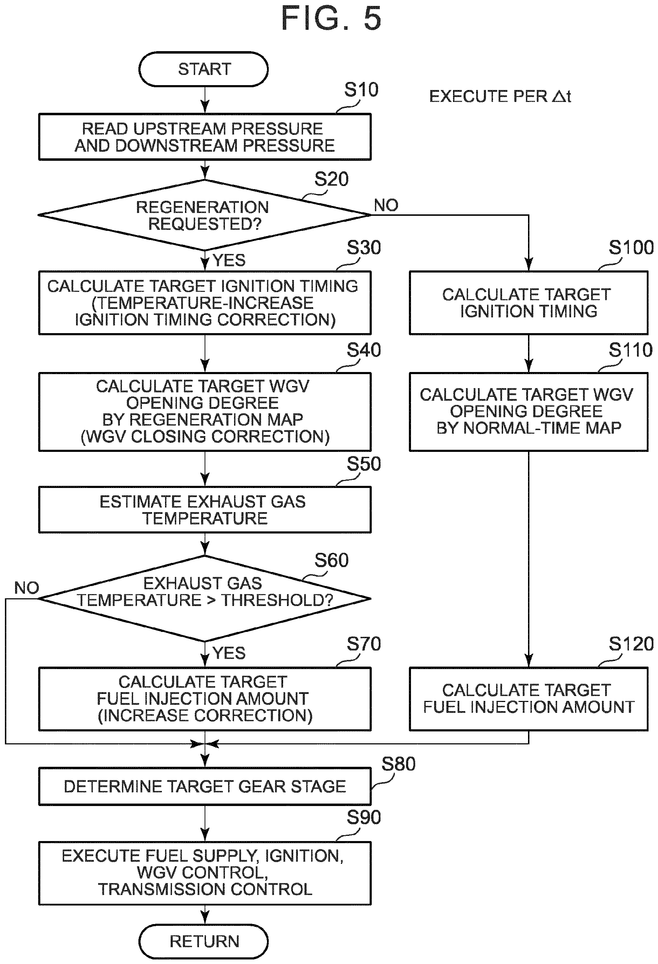

FIG. 5 is a flowchart illustrating a process related to controls on the internal combustion engine 1, the WGV 27, and the automatic transmission 30 in connection with filter regeneration executed by the ECU 52. The flowchart illustrated in FIG. 5 is implemented by executing a program stored in the ECU 52 in advance in a predetermined period during the operation of the internal combustion engine 1.

With reference to FIG. 5, in step S10, the ECU 52 reads values of an upstream pressure and a downstream pressure based on signals from the upstream pressure sensor 52 and the downstream pressure sensor 53. Then, the ECU 52 determines whether or not regeneration of the filter 51 is requested (S20). Note that the determination method for determining whether the regeneration of the filter 51 is requested or not and the regeneration control have been described above.

When it is determined that the regeneration of the filter 51 is requested, the ECU 52 performs a temperature-increase ignition retard correction (step S30). More specifically, as described above, the ECU 52 corrects the basic ignition timing by a correction amount corresponding to a predetermined temperature increase retard amount SAht in addition to a correction amount corresponding to an intake air temperature, a valve timing, and the like.

Then, the ECU 52 performs a closing correction of the WGV opening degree as a part of the filter regeneration control (step S40). More specifically, the ECU 52 calculates a target WGV opening degree by use of the regeneration map (indicated by 101b, 102b, 103b, 104b) shown in FIG. 6 as described above.

Then, the ECU 52 estimates an exhaust gas temperature (step S50). The estimation of the exhaust gas temperature is performed for the purpose of avoiding erosion due to overheating of the catalyst, or failure or deterioration due to overheating of the turbine or a catalytic converter body, and is performed by a predetermined function that takes the engine rotation speed, the requested air amount, the ignition timing, and the upstream pressure as parameters. Note that, in the normal time in which the regeneration of the filter 51 is not performed, the estimation of the exhaust gas temperature is performed only by the parameters except for the upstream pressure so as to restrain a calculation load.

Subsequently, the ECU 52 determines whether the exhaust gas temperature thus estimated is larger than a predetermined threshold or not (step S60). In a case of an affirmative determination, a target fuel injection amount is corrected toward an increase side (step S70). A fuel injection amount obtained by the increase may be a fixed amount, or may be an amount that increases as the exhaust gas temperature is higher.

In the meantime, when it is determined that the regeneration of the filter 51 is not requested (NO in S20), the ECU 52 sets normal values, that is, values suitable for an operating state in which the regeneration of the filter 51 is not performed, as a target ignition timing, a target WGV opening degree, and a target fuel injection amount (steps S100 to S120). That is, the ECU 52 corrects the basic ignition timing by the correction amount corresponding to the intake air temperature, the valve timing, and the like (step S100) as described above, without using the correction amount corresponding to the temperature increase retard amount SAht. Further, the ECU 52 sets the target WGV opening degree by use of the normal map (indicated by the curves 101a, 102a, 103a, 104a) shown in FIG. 6 (S110).

Subsequently, the ECU 52 determines a target gear stage according to a predetermined shift map based on an engine rotation speed Ne and a throttle opening degree TA (step S80). The present embodiment uses a single shift map, and even if the execution of the regeneration control to regenerate the filter 51 is requested, a rotation number of the internal combustion engine 1 and a transmission ratio of the automatic transmission 30 are not changed from those used in a case where the execution of the regeneration control is not requested.

Finally, in step S90, the ECU 52 performs fuel supply by the injector 12, ignition by the ignition plug 7, a control on the WGV 27, and a control on the automatic transmission 30 according to the target fuel injection amount calculated in step S70 or S120, the target ignition timing calculated in step S30 or S100, the target WGV opening degree calculated in step S40 or S110, and the target gear stage determined in step S80, so as to achieve these target values.

As a result of the above-mentioned process, in the present embodiment, in a case where the regeneration of the filter 51 is requested, ignition is performed at the ignition timing obtained by the temperature-increase ignition retard correction in step S30, so that the exhaust gas temperature is increased and the temperature increase of the filter 51 is promoted. Further, when the WGV 27 is controlled so as to achieve the target WGV opening degree obtained by the closing correction in step S40, the decrease of the engine output torque along with the temperature-increase ignition retardation is compensated. Further, since the increase correction is performed on the target fuel injection amount based on the exhaust gas temperature accurately calculated in consideration of the upstream pressure in step S50 (step S70), the fuel is injected according to the target injection amount thus corrected accurately. Hereby, it is possible to minimize the increase of the fuel injection amount and to restrain a decrease of the exhaust gas temperature along with excessive fuel supply.

As has been already described, in the present embodiment, when the regeneration of the filter 51 is request (step S20), the ignition timing of the internal combustion engine is retarded relative to a case where the regeneration is not requested (step S30), and further, the opening degree of the WGV 27 is controlled so as to be decreased (step S40). When the ignition timing is retarded, it is possible to increase the exhaust gas temperature, but in the meantime, the output may decrease. In view of this, the opening degree of the WGV 27 is controlled to be small (that is, toward the closing side), so that a boost pressure is increased, thereby making it possible to restrain or compensate for the decrease of the output.

The vehicle according to the present embodiment includes the mechanical water pump 40 connected to the output shaft of the internal combustion engine 1, and the mechanical water pump 40 is configured to supply the coolant to the water jacket 18 provided in the cylinder head so as to be able to cool down the exhaust manifold 14. In the configuration to cool down the exhaust manifold 14 by the coolant from the mechanical water pump 40, when the rotation number of the internal combustion engine 1 increases, a flow rate of the coolant increases accordingly, so that the cooling of the exhaust manifold 14 is promoted, which may prevent the temperature increase of the filter 51. However, in the present embodiment, due to the temperature-increase ignition retardation (step S30) and the closing correction of the WGV 27 (step S40), it is possible to restrain the increase in the rotation number of the internal combustion engine 1 and to restrain or compensate for the decrease of the output, thereby making it possible to restrain the decrease of the exhaust gas temperature due to the increase of the flow rate of the coolant by the mechanical water pump 40 and to regenerate the filter 51 quickly.

The present invention is also applicable to a diesel engine. Further, the present invention is also preferably applicable to a hybrid vehicle including a drive source such as a motor generator in addition to the internal combustion engine.

The present invention is not limited to the above embodiment and modification, and the present invention includes all modifications, applications, and equivalents included in the concept of the present invention defined by claims. When regeneration of a filter (51) is request (S20), an ignition timing of an internal combustion engine is controlled to be retarded (S30) and an opening degree of a wastegate valve (27) is controlled to be decreased (S40), as compared with a case where the regeneration is not requested. When the ignition timing is retarded, it is possible to increase an exhaust gas temperature, but in the meantime, an output may decrease. In view of this, the opening degree of the wastegate valve is controlled to be decreased that is, toward a closing side. Hereby, a boost pressure is increased, thereby making it possible to restrain or compensate for the decrease of the output.

## Claims

1. A control device for a vehicle,
the vehicle including
an internal combustion engine (1) provided with an exhaust manifold (14) in a cylinder head, the internal combustion engine being a spark-ignition engine,
a mechanical water pump (40) connected to an output shaft of the internal combustion engine, the mechanical water pump being configured to supply a coolant to a water jacket (18) provided in the cylinder head and cool down the exhaust manifold,
a turbocharger (25) connected to the internal combustion engine,
a bypass passage (26) configured to bypass a turbine of the turbocharger,
a wastegate valve (27) configured to open and close the bypass passage, and
a filter (51) provided in an exhaust passage of the internal combustion engine, the filter being configured to catch particulate matter in the exhaust gas,
the control device comprising
an electronic control unit (52) configured such that, when regeneration of the filter is requested, the electronic control unit retards an ignition timing of the internal combustion engine and decreases an opening degree of the wastegate valve as compared with the ignition timing of the internal combustion engine and the opening degree of the wastegate valve when the regeneration is not requested, and
an electronic control unit (52) configured to increase a target fuel injection amount based on an exhaust gas temperature when the exhaust gas temperature is larger than a predetermined threshold.

2. The control device according to claim 1, wherein
the electronic control unit is configured to retard the ignition timing of the internal combustion engine such that a temperature of the filter increases to be equal to or larger than a regenerable temperature at which the particulate matter deposited in the filter is removed by burning.

3. The control device according to claim 1 or 2, wherein
the electronic control unit is configured to decrease the opening degree of the wastegate valve such that a decrease in torque of the internal combustion engine by the retardation of the ignition timing is compensated.

## Patentansprüche

1. Steuerungsvorrichtung für ein Fahrzeug, wobei das Fahrzeug Folgendes hat:
eine Brennkraftmaschine (1), die mit einem Auslasskrümmer (14) in einem Zylinderkopf versehen ist, wobei die Brennkraftmaschine eine Funkenzündungsmaschine ist,
eine mechanische Wasserpumpe (40), die mit einer Ausgangswelle der Brennkraftmaschine verbunden ist, wobei die mechanische Wasserpumpe gestaltet ist, um ein Kühlmittel zu einer Wassertasche (18) zuzuführen, die in dem Zylinderkopf vorgesehen ist, und den Auslasskrümmer abzukühlen,
einen Turbolader (25), der mit der Brennkraftmaschine verbunden ist,
einen Umgehungsdurchgang (26), der gestaltet ist, um eine Turbine des Turboladers zu umgehen,
ein Wastegate-Ventil (27), das gestaltet ist, um den Umgehungsdurchgang zu öffnen und zu schließen, und
einen Filter (51), der in einem Auslassdurchgang an der Brennkraftmaschine vorgesehen ist, wobei der Filter gestaltet ist, um Partikel in dem Abgas zu fangen,
wobei die Steuerungsvorrichtung Folgendes aufweist:
eine elektronische Steuerungseinheit (52), die derart gestaltet ist, dass, wenn eine Regeneration des Filters angefragt ist, die elektronische Steuerungseinheit eine Zündungszeitabstimmung der Brennkraftmaschine verzögert und einen Öffnungsgrad des Wastegate-Ventils verringert im Vergleich zu der Zündzeitabstimmung der Brennkraftmaschine und dem Öffnungsgrad des Wastegate-ventils, wenn die Regeneration nicht angefragt ist, und
eine elektronische Steuerungseinheit (52), die gestaltet ist, um eine Sollkraftstoffeinspritzmenge auf der Basis einer Abgastemperatur zu erhöhen, wenn die Abgastemperatur größer ist als ein vorbestimmter Schwellenwert.

2. Steuerungsvorrichtung nach Anspruch 1, wobei die elektronische Steuerungseinheit gestaltet ist, um die Zündungszeitabstimmung der Brennkraftmaschine derart zu verzögern, dass sich eine Temperatur des Filters erhöht, um gleich wie oder größer als eine Regenerationstemperatur zu sein, bei der die Partikel, die in dem Filter abgelagert sind, durch Verbrennen entfernt werden.

3. Steuerungsvorrichtung nach Anspruch 1 oder 2, wobei die elektronische Steuerungseinheit gestaltet ist, um den Öffnungsgrad des Wastegate-ventils derart zu verringern, dass eine Verringerung eines Drehmoments der Brennkraftmaschine durch die Verzögerung der Zündzeitabstimmung ausgeglichen wird.

## Revendications

1. Dispositif de commande pour un véhicule,
le véhicule comprenant :
un moteur à combustion interne (1) prévu avec un collecteur d'échappement (14) dans une culasse, le moteur à combustion interne étant un moteur à allumage commandé,
une pompe à eau mécanique (40) raccordée à un arbre de sortie du moteur à combustion interne, la pompe à eau mécanique étant configurée pour fournir un réfrigérant à une chemise d'eau (18) prévue dans la culasse et refroidir le collecteur d'échappement,
un turbocompresseur (25) raccordé au moteur à combustion interne,
un passage de dérivation (26) configuré pour contourner une turbine du turbocompresseur,
une soupape de décharge (27) configurée pour ouvrir et fermer le passage de dérivation, et
un filtre (51) prévu dans un passage d'échappement du moteur à combustion interne, le filtre étant configuré pour capturer la matière particulaire dans le gaz d'échappement,
le dispositif de commande comprenant :
une unité de commande électronique (52) configurée de sorte que, lorsque la régénération du filtre est requise, l'unité de commande électronique retarde un calage de l'allumage du moteur à combustion interne et diminue un degré d'ouverture de la soupape de décharge par rapport au calage de l'allumage du moteur à combustion interne et au degré d'ouverture de la soupape de décharge lorsque la régénération n'est pas requise, et
une unité de commande électronique (52) configurée pour augmenter une quantité d'injection de carburant cible sur la base d'une température de gaz d'échappement lorsque la température de gaz d'échappement est supérieure à un seuil prédéterminé.

2. Dispositif de commande selon la revendication 1, dans lequel :
l'unité de commande électronique est configurée pour retarder le calage de l'allumage du moteur à combustion interne de sorte qu'une température du filtre augmente pour être égale ou supérieure à une température pouvant être régénérée à laquelle la matière particulaire déposée dans le filtre est retirée par combustion.

3. Dispositif de commande selon la revendication 1 ou 2, dans lequel :
l'unité de commande électronique est configurée pour diminuer le degré d'ouverture de la soupape de décharge de sorte qu'une diminution de couple du moteur à combustion interne par le retard du calage de l'allumage, est compensée.
